# EUROPÄISCHE PATENTSCHRIFT

(11) **EP 2 371 649 B1**
(45) Veröffentlichungstag und Bekanntmachung des Hinweises auf die Patenterteilung: **03.10.2012**
(21) Anmeldenummer: 11001385.1
(22) Anmeldetag: 19.02.2011
(51) Int. Cl.: B60W 40/08, G06K 9/00

(54) **Verfahren zur Ermittlung von auf die Blickrichtung eines Fahrers und die Position der Hände des Fahrers bezüglich des Lenkrads bezogenen Informationen in einem Kraftfahrzeug und Kraftfahrzeug**
Method for determining information related to the direction a driver is looking and the position of their hands relative to the steering wheel in a motor vehicle and motor vehicle
Procédé d'émission des informations relatives à la direction du regard d'un conducteur et la position des mains d'un conducteur par rapport au volant dans un véhicule automobile et véhicule automobile

(30) Priorität: 29.03.2010 DE 102010013243
(43) Veröffentlichungstag der Anmeldung: 05.10.2011
(73) Patentinhaber: Audi AG, 85045 Ingolstadt (DE)
(72) Erfinder: Limbacher, Reimund, 85055 Ingolstadt (DE)
(74) Vertreter: Thielmann, Frank

(56) Entgegenhaltungen:
- EP-A2- 1 703 436
- EP-A2- 1 830 244
- DE-A1- 19 621 435
- DE-A1-102005 019 154
- DE-A1-102008 044 075
- US-A- 6 049 747
- US-A1- 2008 080 741

## Beschreibung

Die Erfindung betrifft ein Verfahren zur Ermittlung von auf die Blickrichtung eines Fahrers und/oder die Position der Hände des Fahrers bezüglich des Lenkrads bezogenen Informationen in einem Kraftfahrzeug sowie ein Kraftfahrzeug.

In heutigen Fahrerassistenzsystemen und Sicherheitssystemen in Kraftfahrzeugen wird eine Vielzahl von Informationen benutzt, um eine bessere Einstellung und Wirksamkeit der Systeme zu ermöglichen. Darunter sind auch Informationen aus dem Innenraum des Kraftfahrzeugs, die den Fahrer betreffen können.

So ist es beispielsweise bekannt, die Blickrichtung des Fahrers eines Kraftfahrzeugs zu ermitteln und eine diesbezügliche Information in Fahrerassistenzsystemen zu nutzen. Zur Ermittlung einer solchen Information wird meist eine Videokamera verwendet, die den Fahrerkopf frontal von vorn aufzeichnet. Die Kamera kann dazu beispielsweise im Bereich eines Kombinationsinstruments bzw. im Bereich der Armaturentafel, in der Nähe der Frontscheibe, positioniert werden. Über Bildverarbeitungsalgorithmen wird ein durch die Kamera aufgenommenes Bild nach typischen Merkmalen durchsucht, beispielsweise zwei runden Augen, einer länglichen Nase und einem quer verlaufenden Mund. Durch Auswertung der Symmetrieeigenschaften dieser Merkmale kann bereits eine einfache Kopfausrichtungserkennung realisiert werden; eine verbesserte Ausführungsform sieht vor, dass auch die Pupillen im Bereich der Augen aufgefunden und ausgewertet werden.

Zur ausreichenden Erkennbarkeit der Szenerie bei Dunkelheit kann eine Infrarot-Kamera sowie eine aktive Infrarot-Beleuchtung des Oberkörpers des Fahrers von vorne realisiert werden.

Diese Blickrichtungs- bzw. Kopfausrichtungserkennung wird beispielsweise verwendet, um den Aufmerksamkeitsgrad des Fahrers in Bezug auf die Beobachtung der Straße zu ermitteln. Mit Hilfe dieses Aufmerksamkeitsgrades werden dann Fahrerassistenz- und/oder Sicherheitssysteme unterschiedlich früh oder stark angesteuert, das heißt, es werden Betriebsparameter dieser Systeme eingestellt.

Konkrete Beispiele hierfür sind: Bei Kollisionswarnungs- und Kollisionsnotbremssystemen ist es bekannt, bei Blickabwendung des Fahrers eine frühere Auslösung der Warnung bzw. des Bremsvorgangs einzustellen. Bei ACC-Stop&Go-Systemen und Stauassistenzsystemen wird ein automatisches Anfahren nicht ermöglicht, wenn der Blick des Fahrers nicht auf das Verkehrsgeschehen gerichtet ist. Spurhalteassistenzsysteme (Lane Departure Warning) warnen bei Unaufmerksamkeit deutlich früher oder stärker als üblich. Schließlich sind noch Spurwechselassistenzsysteme zu nennen, die ebenso früher oder stärker warnen, wenn der Fahrerblick nicht auf den Außenspiegel gerichtet ist.

Das hauptsächliche Problem der bekannten Varianten der Blickrichtungserkennung ist, dass die Kamera frontal vor dem Fahrer untergebracht werden muss, was hohe und komplexe Anforderungen im Fahrzeugdesign stellt.

Eine weitere Information, die in manchen Fahrerassistenz- und Sicherheitssystemen verwendet wird, insbesondere bei Systemen, die automatische Querführungseingriffe über das Lenksystem erzeugen, ist die Information, ob die Hände des Fahrers am Lenkrad befindlich sind oder nicht. Zur Ermittlung dieser Information sind derzeit zwei Verfahren bekannt.

Zum einen wurde vorgeschlagen, die physikalische Präsenz der Hände oder einer Hand am Lenkrad durch elektrisch leitfähige Bahnen im Lenkradkranz zu erkennen. Dazu können beispielsweise die Heizdrähte einer Lenkradheizung verwendet werden. Durch die Anwesenheit elektrisch leitfähiger Objekte wie der Hände ändern sich die kapazitiven Eigenschaften der stromdurchflossenen Leiter, was über geeignete Messeinrichtungen erfasst werden kann.

Zum anderen ist es bekannt, die Signale eines Lenkradwinkel- und/oder Lenkradmomentensensors auszuwerten. Dabei wird der Effekt genutzt, dass der Fahrer selbst bei leichter Berührung des Lenkrads eine Kraft oder ein Moment in das Lenksystem einbringt, die bzw. das in den Signalen der oben genannten Sensoren auswertbar ist. Dabei wird neben den Amplitudenwerten der Signale wesentlich auch die Signaländerungsgeschwindigkeit oder deren erste Ableitung ausgewertet.

Genutzt wird diese Lenkradinformation beispielsweise in aktiven Spurhaltesystemen oder Stauassistenzsystemen/Staupilotsystemen, die im Niedergeschwindigkeitsbereich neben der Längsführung über Gas und Bremse den Fahrer auch bei der Lenkaufgabe entlasten. Wird erkannt, dass der Fahrer nicht wenigstens eine Hand am Lenkrad hat (häufig als "Hands-Off-Information" bezeichnet), so wird bei bestimmten Funktionsauslegungen das System abgeschaltet und/oder der Fahrer erhält einen Hinweis und/oder eine Fahrübernahmeaufforderung.

Die beschriebenen "Hands-Off-Erkennungen" weisen beide Nachteile auf. Zum einen ist die kapazitative Erkennung durch Betrachtung stromdurchflossener Leiter technisch aufwendig und teuer. Außerdem ist die Zuverlässigkeit eingeschränkt, da die korrekte Bestimmung auch durch Einflüsse wie Feuchtigkeit auf der Haut, die Hauttemperatur und Handschuhe beeinflusst werden kann. Auch kann das Berühren des Lenkrads mit den Knien fälschlicherweise noch zur Ermittlung einer wenigstens eine Hand am Lenkrad anzeigenden Information (oft auch "Hands-On-Information" genannt) führen. Andererseits wird ein stabiles Halten des Lenkrads mit zwei oder vier Fingern schon als "Hands-Off" ausgewertet. Aus diesen Gründen wird das System bislang nicht in der Praxis eingesetzt.

Die Hands-Off-Erkennung über die Auswertung von Signalen von Lenkradsensoren ist zwar preisgünstig, aber sehr fehleranfällig. Selbst bei losgelassenem Lenkrad können beispielsweise durch Fahrbahnunebenheiten Lenkmomente von unten als Seitenkräfte über die Räder eingeleitet werden. Möglich ist dies durch die Trägheit der dabei beschleunigten Massen von Zahnstange, Lenksäule und Lenkradkranz. Die resultierend gemessenen Signale können nicht von durch den Fahrer aufgebrachten Lenksignalen unterschieden werden. In solchen Fällen kommt es oft zur Nichtauslösung der Hands-Off-Erkennung. Andererseits führt ein Fahren mit nur leicht angelegten Händen zu häufigem Falschauslösen der Hands-Off-Erkennung, insbesondere, wenn sie sehr sensibel ausgelegt ist.

Die gattungsbildende US 2008/0080741 A1 betrifft ein Insassendetektionssystem, dessen grundlegende Idee es ist, dreidimensionale Bilder des Fahrers des Kraftfahrzeugs aufzunehmen. Hieraus sollen Informationen über die Position und/oder die Bewegung des Fahrerkopfes oder der Hände gezogen werden. Es können eine oder mehrere Photographievorrichtungen vorgesehen sein, die eine Bereich des Kopfes und Oberkörpers oder einen Bereich, in dem die Hände des Fahrers existieren, aufnehmen.

Der Erfindung liegt daher die Aufgabe zugrunde, ein Verfahren zur insbesondere demgegenüber verbesserten Ermittlung der Informationen bezüglich der Blickrichtung und des Hands-Off anzugeben.

Zur Lösung dieser Aufgabe sind bei einem Verfahren der eingangs genannten Art erfindungsgemäß die Merkmale des Anspruchs 1 vorgesehen.

Bei der vorliegenden Erfindung ist also die Verwendung einer einzigen Bildgebungseinrichtung, insbesondere einer einzigen Videokamera, vollkommen ausreichend, um beide gewünschten Informationen zu erhalten. Erreicht wird dies durch eine neuartige Anordnung der Bildgebungseinrichtung derart, dass sie das Lenkrad und den Kopf des Fahrers gleichzeitig erfasst. Das bedeutet, dass mittels einer beispielsweise von einer Bildverarbeitungseinrichtung durchgeführten Bildverarbeitung aus den Bildern der Bildgebungseinrichtung sowohl Informationen bezüglich des Kopfes, also der Blickrichtung, ermittelt werden können wie Informationen bezüglich des Lenkrads, insbesondere im Hinblick auf die Befindlichkeit der Hände des Fahrers am Lenkrad. Diese so ermittelten Informationen können dann vorteilhaft genutzt werden, um wenigstens einen Betriebsparameter wenigstens eines Fahrerassistenzsystems und/oder Sicherheitssystems des Kraftfahrzeugs anzupassen. Beispiele hierzu wurden eingangs bereits erläutert.

Ein solches Verfahren ist zum einen aufgrund des nur einen benötigten Sensors und der Bildverarbeitungseinrichtung einfach, wenig aufwendig und kostengünstig zu realisieren und erlaubt aber gleichzeitig erstmals eine sehr sichere Erkennung eines Hands-Off-Zustandes.

Insbesondere ist die Bildgebungseinrichtung dabei so angeordnet, dass die betreffende Szenerie seitlich aufgenommen wird. Auf diese Weise kann die Bildgebungseinrichtungsposition vorteilhafterweise designverträglicher gewählt werden. Dazu ist zweckmäßigerweise vorgesehen, dass eine zur seitlichen Aufnahme des Kopfes des Fahrers und/oder zur Aufnahme des Lenkradkranzes unter einem Winkel angeordnete, insbesondere senkrecht zur Fahrtrichtung ausgerichtete Bildgebungseinrichtung verwendet wird. Die Position in Fahrtrichtung kann dabei so gewählt werden, dass der Lenkradkranz leicht schräg von hinten aufgenommen wird. Eine solche Ausrichtung der Bildgebungseinrichtung im Wesentlichen senkrecht zur Fahrtrichtung und horizontal bzw. leicht nach oben oder unten geneigt ermöglicht es, selbstverständlich bei angepasstem Öffnungswinkel und angepasster Brennweite der Bildgebungseinrichtung, sowohl den Fahrerkopf von der Seite, das heißt, im Profil, als auch gleichzeitig die Fahrerhände im Bereich des Lenkradkranzes aufzunehmen und im Bild zu detektieren.

Konkret ist zur Positionierung der Bildgebungseinrichtung vorgesehen, dass eine in einem dachnahen Bereich des A-Pfostens oder eine am Dach oberhalb einer Beifahrertür, insbesondere im Bereich eines Haltegriffes, angeordnete Bildgebungseinrichtung verwendet wird. Alternativ kann die Bildgebungseinrichtung auch in der Beifahrertürverkleidung, unterhalb der Seitenscheibe, angeordnet werden.

Es sei an dieser Stelle noch angemerkt, dass grundsätzlich verwendbare Bildverarbeitungsalgorithmen, beispielsweise zur Kanten-/Merkmalserkennung und/oder zur Segmentierung weithin bekannt sind, so dass auf diese hier nicht mehr im Detail eingegangen werden soll, sondern nur auf spezielle Strategien und Kriterien bei deren Anwendung eingegangen werden soll, deren konkrete Umsetzung mit den aus dem Stand der Technik bereits bekannten Werkzeugen erfolgen kann.

In einer besonders vorteilhaften Ausführungsform kann vorgesehen sein, dass die Kopfausrichtung bezüglich der Fahrtrichtung anhand eines Überstandes der in den Daten detektierten Nase des Fahrers ermittelt wird. Es wird also im Rahmen der Bildverarbeitung der Überstand der Nase des Fahrers über das sonstige Gesichtsprofil bestimmt. Beim Blick geradeaus nimmt dieser Überstand ein Maximum an. Beim Blick nach links oder rechts nimmt der Überstand der Nase kontinuierlich ab, bis ab einem definierten Kopfausrichtungswinkel zur Seite die Nase im Profil völlig verschwindet. Um die Ortung der Nase im Bild zu erleichter, können weitere Merkmale in den Daten detektiert und berücksichtigt werden, insbesondere ein Ohr und/oder ein Kinn und/oder ein Auge.

In besonders zweckmäßiger weiterer Ausgestaltung der Nasenüberstandserkennung wird vorgeschlagen, dass eine relative Nasenlängenänderung bei Kopfdrehung bezüglich einer Basisnasenlänge ermittelt wird. Damit wird berücksichtigt, dass die Nasenlänge verschiedener Fahrer individuell variiert. Dabei kann die Basisnasenlänge als Maximalnasenlänge in einer Datenauswertung über einen Zeitraum ermittelt werden. Bei einer solchen Langzeit-Maximalwertbestimmung kann beispielsweise davon ausgegangen werden, dass der Fahrer im Mittel meist geradeaus blickt. So wird insgesamt ein robustes Verfahren geschaffen, um eine Kopfausrichtung und mithin eine Information über die Blickrichtung des Fahrers zu ermitteln, die auch bei einer Betrachtung des Profils des Kopfes gute Ergebnisse liefert, die für die meisten einleitend diskutierten Anwendungsfälle ausreichend sind.

Im Rahmen der Ermittlung der Information bezüglich der Hände des Fahrers im Bezug auf das Lenkrad kann vorgesehen sein, dass die ovale Form des Lenkradkranzes aus den Daten ermittelt und bei der Ermittlung der Informationen berücksichtigt wird. Der Lenkradkranz weist aus der schrägen Seitenperspektive typischerweise eine ovale Form auf, die mittels der Bildverarbeitung leicht detektiert werden kann. Diese Information kann auf zwei unterschiedliche Weisen weiter ausgewertet werden.

Zum einen kann vorgesehen sein, dass zur Ermittlung der auf die Position der Hände bezüglich des Lenkrads bezogenen Information die ovale Form auf Unterbrechungen untersucht wird. Es wird folglich zunächst die ovale Grundform des Lenkradkranzes erkannt, welche dann in einem zweiten Schritt auf Unterbrechungen untersucht werden kann. Solche Unterbrechungen werden in einem Kraftfahrzeug üblicherweise nur durch ein oder zwei Hände, die sich am Lenkrad befinden, hervorgerufen, so dass das Auffinden von gegebenenfalls einen Grenzwert für die Länge der Unterbrechung überschreitenden Unterbrechungen dazu führt, dass wenigstens eine Hand als am Lenkrad befindlich angenommen wird. Sind jedoch keine Unterbrechungen gegeben, wird die Information als eine "Hands-Off-Information" ermittelt.

Alternativ, gegebenenfalls aber auch zusätzlich, kann vorgesehen sein, dass zur Ermittlung der auf die Position der Hände bezüglich des Lenkrads bezogenen Information eine Position beider Hände aus den Daten ermittelt wird und ein Vergleich der Positionen der ovalen Form und der Hände durchgeführt wird, wobei bei einer Überdeckung im Bild die Hände des Fahrers am Lenkrad angenommen werden. Eine Hand kann dabei beispielsweise als Ende eines Arms, der typischerweise im Bild länglich und gewinkelt vom Körper absteht, gesucht werden. Zusätzlich können bei der Erkennung der Hand ihre typische Oberfläche, also helle/dunkle Haut und/oder die mehrgliedrige Struktur der Hand, also die Finger, berücksichtigt werden. Beispielsweise können dann durch die Hand und das Lenkrad (anhand dessen ovaler Form) belegte Flächen in einem Bild ermittelt werden, bei deren Überlappung im Rahmen eines Positionsvergleichs wenigstens eine Hand als am Lenkrad angenommen werden kann. Tritt keine Überlappung der Flächen aus, kann von einem Hands-Off-Zustand ausgegangen werden.

Zur besseren Erkennung und Auswertung der aufzunehmenden Szenerie kann vorgesehen sein, dass die Bildgebungseinrichtung eine Infrarot-Kamera oder eine Kamera mit einem Infrarotdurchlassfilter ist, wobei eine Infrarot-Lichtquelle zur Beleuchtung der aufzunehmenden Szenerie verwendet wird. So ist auch insbesondere bei Dunkelheit eine robuste und verlässliche Ermittlung der Informationen möglich.

In weiterer vorteilhafter Ausgestaltung der vorliegenden Erfindung kann vorgesehen sein, dass bei der Ermittlung der auf die Position der Hände bezüglich des Lenkrads bezogenen Information Daten wenigstens einer weiteren Messeinrichtung, insbesondere eines Lenksignalsensors, berücksichtigt werden, insbesondere zur gegenseitigen Plausibilisierung. Es wird also vorgeschlagen, die vorgeschlagene Hands-Off-Erkennung mit einem der eingangs in der Diskussion des Standes der Technik bereits genannten Verfahren zur Hands-Off-Erkennung zu kombinieren, um die Zuverlässigkeit der Erkennung weiter zu erhöhen. Zwei oder mehr einander ergänzende Verfahren ermöglichen eine gegenseitige Plausibilisierung der Ergebnisse und damit eine Erhöhung der Zuverlässigkeit und der Robustheit des Vorgehens gegenüber Falscherkennungen. Dabei wird besonders vorteilhaft die Kombination mit dem ebenfalls kostengünstigen Verfahren, dass die Erkennung von Hands-Off-Zuständen anhand der Auswertung von Signalen eines Lenkwinkelsensors und/oder eines Lenkmomentensensors, die meist ohnehin vorgesehen sind, vornimmt, realisiert.

Mit dem erfindungsgemäßen Verfahren ist es auch denkbar, weitere, insbesondere zur Ansteuerung von Fahrzeugsystemen nutzbare Informationen zu ermitteln. So kann zweckmäßigerweise vorgesehen sein, dass die mittels der Bildgebungseinrichtung aufgenommenen Daten durch die Bildverarbeitung auch zur Ermittlung einer die Anwesenheit eines Fahrers beschreibenden Information ausgewertet werden können. Eine solche Anwesenheitsinformation kann beispielsweise bei der Ansteuerung und/oder dem Betrieb von Fahrzeugsystemen zum automatischen Halten des Kraftfahrzeugs im Stillstand verwendet werden, insbesondere bei Berganfahrassistenten, Auto-Hold-Funktionen, Längsführungssystemen wie "Automatic Cruise Control" (ACC) mit Stop&Go-Funktion oder Motor-Start/Stop-Systemen. Herkömmlich wurde eine solche Information beispielsweise über Türkontakt-, Sicherheitsgurtschloß- oder Sitzbelegungserkennungssignale oder Kombinationen hiervon ermittelt. Das hat den Nachteil, dass zur sicheren Erkennung eine Kombination mehrerer Signale (Redundanz) benötigt wird oder eine Diagnosefähigkeit der entsprechenden Sensoren. Beispielsweise kann eine Erkennung über Sitzbelegungssensoren zu unberechtigten Fehlerkennungen führen, so z.B., wenn sich der Fahrer auf der Sitzfläche bewegt. Das erfindungsgemäße Verfahren erlaubt nun eine sicherere Erkennung über die Bildgebungseinrichtung, gegebenenfalls auch in in Kombination mit den bereits bekannten Signalen. Es sei angemerkt, dass es grundsätzlich auch denkbar ist, die Ermittlung der Anwesenheitsinformation über Bildgebung unabhängig von den anderen Informationen zu realisieren.

Konkret kann zur Ermittlung der Anwesenheitsinformation beispielsweise vorgesehen sein, dass ein Referenzbild, in dem kein Fahrer vorhanden ist, verwendet wird, und ein Differenzbild zwischen dem aktuellen Bild und dem Referenzbild erstellt und ausgewertet wird. Beispielsweise kann eine, gegebenenfalls über bestimmte Bereiche gewichtete, Grauwertsumme oder dergleichen für das Differenzbild gebildet werden, wobei bei Überschreitung eines Grenzwerts die Abwesenheit des Fahrers angenommen wird. Alternativ oder zusätzlich kann vorgesehen sein, dass über die Bildauswertung bewegte Körperteile des Fahrers gezielt nachverfolgt werden, insbesondere mittels Methoden des optischen Flusses, wobei bei Vorhandensein solcher Körperteile auch das Vorhandensein des Fahrers angenommen werden kann.

Neben dem Verfahren betrifft die Erfindung auch ein Kraftfahrzeug mit wenigstens einem Fahrerassistenzsystem und/oder wenigstens einem Sicherheitssystem, einer Bildverarbeitungseinrichtung und einer Bildgebungseinrichtung, welches zur Durchführung des erfindungsgemäßen Verfahrens ausgebildet ist. Beispielsweise kann dazu eine die Bildverarbeitungseinrichtung umfassende Steuereinrichtung verwendet werden. Sämtliche Ausführungen bezüglich des erfindungsgemäßen Verfahrens lassen sich analog auf das erfindungsgemäße Kraftfahrzeug übertragen.

So kann insbesondere vorgesehen sein, dass die Bildgebungseinrichtung eine zur seitlichen Aufnahme des Kopfes des Fahrers und/oder zur Aufnahme des Lenkradkranzes unter einem Winkel angeordnete, insbesondere senkrecht zur Fahrtrichtung ausgerichtete Bildgebungseinrichtung, insbesondere eine Kamera, ist. Diese Ausgestaltung ermöglich in vorteilhafter Weise die oben bereits diskutierte Bildverarbeitung. Die Bildgebungseinrichtung kann dabei im Wesentlichen senkrecht zur Fahrtrichtung und ansonsten horizontal oder leicht geneigt positioniert werden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug mit einer möglichen Positionierung einer Bildgebungseinrichtung,
- Fig. 2: eine Skizze zur Ermittlung des Überstands der Nase aus einem Bild,
- Fig. 3: ein abstrahiert dargestelltes mögliches Kamerabild in einer ersten Situation, und
- Fig. 4: ein abstrahiert dargestelltes, mögliches Kamerabild in einer zweiten Situation.

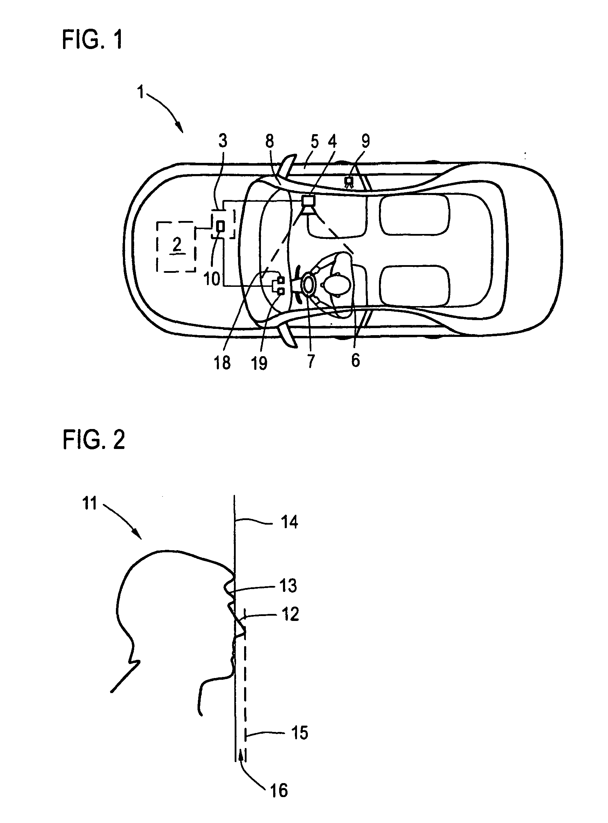

Fig. 1 zeigt ein erfindungsgemäßes Kraftfahrzeug 1 in einer Prinzipskizze. Es umfasst mehrere hier nur schematisch bei 2 angedeutete Fahrerassistenz- und Sicherheitssysteme, die beispielsweise ein gegebenenfalls aktives Spurhalteassistenzsystem, ein ACC-Stop&Go-System, einen Staupiloten oder dergleichen umfassen können. Betriebsparameter dieser Fahrerassistenz- und Sicherheitssysteme 2 werden unter Berücksichtigung von automatisch ermittelten Informationen angepasst. Die in Fig. 1 weiterhin gezeigte Steuereinrichtung 3 dient dabei insbesondere zur Ermittlung einer auf die Blickrichtung des Fahrers bezogenen Information und einer auf die Position der Hände des Fahrers bezüglich des Lenkrads bezogenen Information, jedoch kann sie auch zur Ermittlung weiterer Informationen ausgebildet sein. In jedem Fall kann sie das erfindungsgemäße Verfahren ausführen.

Hierzu umfasst das Kraftfahrzeug 1 ferner eine Infrarot-Kamera 4 als Bildgebungseinrichtung, die im vorliegenden Fall am Dach oberhalb der Beifahrertür 5, im Bereich eines Haltegriffs, derart angeordnet, dass sie den Kopf des Fahrers 6 seitlich, also im Profil, genauso aufnehmen kann wie den Lenkradkranz 7 unter einen leicht schrägen Winkel. Die Kamera 4 ist im Wesentlichen senkrecht zur Fahrtrichtung ausgerichtet und leicht aus der Horizontalen geneigt. Die Kamera 4 kann alternativ auch in einem dachnahen Bereich des beifahrerseitigen A-Pfostens 8 angeordnet sein. Um die Szenerie auch bei Dunkelheit gut erkennen zu können, ist ferner eine Infrarot-Lichtquelle 9 vorgesehen.

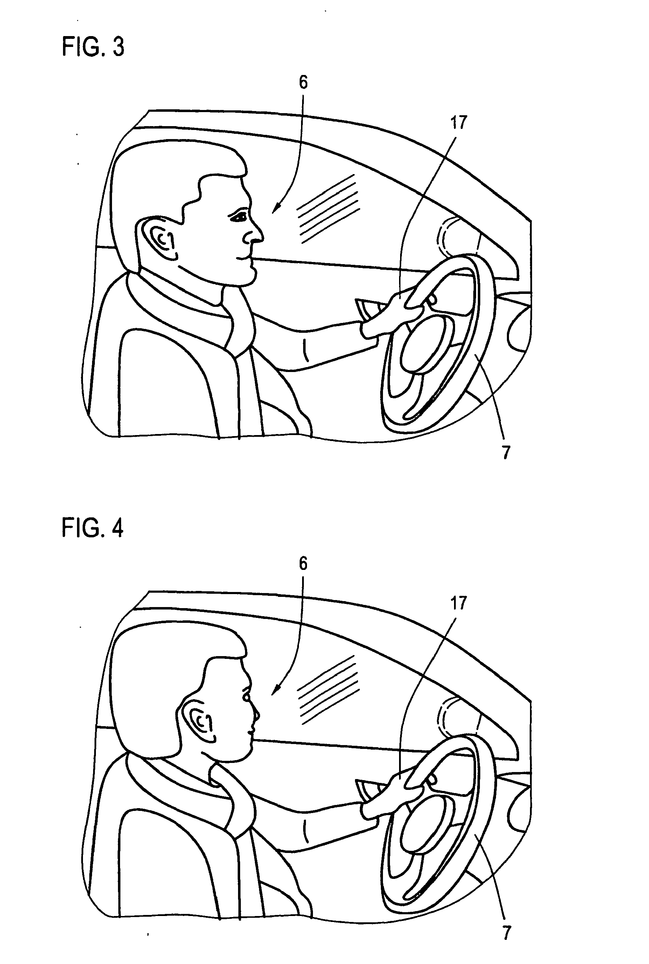

Im Betrieb des Kraftfahrzeugs 1 nimmt die Kamera 4 nun kontinuierlich oder intermittierend Bilder (beispielhafte Bilder zeigen Fig. 3 und Fig. 4) auf, die von einer Bildverarbeitungseinrichtung 10 der Steuereinrichtung 3 so ausgewertet werden, dass die auf die Blickrichtung des Fahrers bezogene Information und die auf die Position der Hände des Fahrers bezüglich des Lenkrads bezogene Information ermittelt werden können.

Dazu wird bezüglich der auf die Blickrichtung des Fahrers bezogenen Information der relative Nasenüberstand betrachtet, was durch Fig. 2 näher dargestellt werden soll. Dort ist ein seitliches Profil 11 des Kopfes des Fahrers 6 gezeigt, wie es aus den Bildern der Kamera 4 durch die Bildverarbeitungseinrichtung 10 mittels bekannter Algorithmen extrahiert werden kann, wenn der Fahrer seinen Blick geradeaus gerichtet hat, wie in Fig. 3 beispielhaft gezeigt. Ersichtlich steht die Nase 12 über das übrige Gesichtsprofil 13 hinaus, wie durch die beiden Hilfslinien 14 und 15 erläuternd hervorgehoben wird. Der Abstand 16 zwischen diesen beiden Hilfslinien 14, 15 ist bei Geradeausblick der maximale Nasenüberstand, der beispielsweise durch Ermittlung des Nasenüberstands über einen vorbestimmten Zeitraum ermittelt werden kann, wobei davon ausgegangen wird, dass der Fahrer 6 im Mittel immer geradeaus schaut.

Der relative Nasenüberstand ergibt sich nun durch Division des aktuell bestimmten Nasenüberstands durch diesen maximalen Nasenüberstand und ergibt ein Maß dafür, wie weit die Kopfausrichtung des Fahrers von der normalen Kopfausrichtung abweicht. Daraus wiederum kann gefolgert werden, wohin der Fahrer blickt und die auf die Blickrichtung des Fahrers bezogene Information kann bestimmt werden.

Es sei an dieser Stelle angemerkt, dass auch vorgesehen sein kann, zur besseren Auffindbarkeit der Nase 12 auch andere Merkmale des Kopfes zu berücksichtigen, beispielsweise die runden Augen, den länglichen Mund oder das Kinn. Auch das Ohr kann Berücksichtigung finden. Weiterhin kann durch Verfeinerung der verwendeten Algorithmen auch eine Aussage darüber getroffen werden, in welche Richtung der Blick des Fahrers 6 vom Geradeausblick abweicht. Hierzu kann berücksichtigt werden, dass bei einer mehr zur Kamera 4 hin gerichteten Blickrichtung ein größerer Teil des Gesichts sichtbar wird, während bei einer von der Kamera 4 weg gerichteten Blickrichtung weniger Gesicht zu sehen ist, dafür gegebenenfalls mehr Haare. Es sind also auch weitere Verfeinerungen der verwendeten Bildverarbeitung denkbar.

Zu erkennen ist der Effekt des Nasenüberstands beispielsweise aus einem Vergleich der Fig. 3 und 4. Während der Fahrer 6 in Fig. 3 geradeaus blickt, blickt er in Fig. 4 nach links. Der in Fig. 4 zu erkennende Nasenüberstand ist folglich deutlich geringer als der in Fig. 3 zu erkennende Nasenüberstand.

Zur Ermittlung der auf die Position der Hände des Fahrers 6 bezüglich des Lenkrads bezogenen Information wird mittels der Bildverarbeitungseinrichtung 10 die ovale Form des Lenkradkranzes 7 in den Bildern ermittelt. Die ovale Form ergibt sich aufgrund der Aufnahme unter einem Winkel, vgl. hierzu die Ausrichtung der Kamera 4 gemäß Fig. 1. Die ovale Form des Lenkradkranzes 7 ist in Fig. 3 und in Fig. 4 deutlich zu erkennen und kann über die Bildverarbeitung leicht aufgefunden werden.

In einem weiteren Schritt wird danach nun überprüft, ob die ovale Form im jeweiligen Bild durchbrochen ist. Dies ist ersichtlich in Fig. 3 und in Fig. 4 jeweils der Fall, da sich die linke Hand 17 des Fahrers 6 jeweils am Lenkradkranz 7 befindet. Es liegt also ein Hands-On-Zustand vor, so dass die auf die Position der Hände des Fahrers 6 bezüglich des Lenkrads bezogene Information entsprechend ermittelt wird.

Alternativ kann auch vorgesehen werden, dass auch die Hände in den Bildern detektiert werden. Im Beispielsfall der Fig. 3 und 4 würden dabei die hellen, mehrgliedrigen Flächen der linken Hand 17 aufgefunden werden, ggf. unter Berücksichtigung eines sich länglich vom Körper des Fahrers 6 erstreckenden Arms. Ist auch für den Lenkradkranz 7 eine solche Fläche bestimmt worden, kann durch Positionsvergleich festgestellt werden, ob die Flächen überlappen. Wenn ja, kann davon ausgegangen werden, dass sich wenigstens eine Hand des Fahrers 6 am Lenkrad (also am Lenkradkranz 7) befindet, wie in Fig. 3 und 4 offensichtlich der Fall ist.

Im vorliegenden Ausführungsbeispiel umfasst das Kraftfahrzeug 1 ferner noch einen Lenkwinkelsensor 18 und einen Lenkmomentensensor 19, die ihre Daten der Steuereinrichtung 3 ebenfalls zur Auswertung zur Verfügung stellen. Dabei wird versucht, festzustellen, ob auftretende Impulse oder dergleichen darauf hindeuten, dass sich wenigstens eine Hand des Fahrers 6 an dem Lenkradkranz 7 befindet. Diese Auswertung dient der gegenseitigen Plausibilisierung der verschiedenen Hands-Off-Detektionsmechanismen. Die letztendliche auf die Position der Hände des Fahrers 6 bezüglich des Lenkrads bezogene Information wird also unter Berücksichtigung sowohl der Bilder der Kamera 4 als auch der Signale der Sensoren 18, 19 ermittelt.

Es sei schließlich noch angemerkt, dass in einen modifizierten Ausführungsbeispiel zusätzlich auch eine Information über die Anwesenheit des Fahrers 6 aus den Daten der Kamera 4 ermittelt werden kann. Hierzu kann vorgesehen sein, dass aus einem in einer geeigneten Speichereinrichtung der Steuereinrichtung 3 abgelegten Referenzbild ohne Fahrer 6 und einem aktuellen Bild ein Differenzbild ermittelt werden kann, wobei dann die Unterschiede ausgewertet werden, um die Anwesenheitsinformation zu ermitteln. Beispielsweise kann, ggf. für oder gewichtet nach einem bestimmten Gebiet, eine Grauwertsumme bestimmt werden, wobei bei einer Überschreitung eines Grenzwerts für die Grauwertsumme kein Fahrer als anwesend angenommen wird. Denkbar sind zusätzlich oder alternativ auch Methoden des optischen Flusses bezüglich von Körperteilen des Fahrers 6.

## Patentansprüche

1. Verfahren zur Ermittlung von auf die Blickrichtung eines Fahrers und/oder die Position der Hände des Fahrers (6) bezüglich des Lenkrads bezogenen Informationen in einem Kraftfahrzeug (1), wobei von einer das Lenkrad und den Kopf eines Fahrers (6) erfassenden Bildgebungseinrichtung, insbesondere einer Kamera (4), aufgenommene Daten zur Ermittlung der Informationen mittels einer Bildverarbeitung ausgewertet werden, **dadurch gekennzeichnet, dass** eine zur seitlichen Aufnahme des Kopfes des Fahrers (6) und zur Aufnahme des Lenkradkranzes (7) unter einem Winkel, und in einem dachnahen Bereich des A-Pfostens (8) oder eine am Dach oberhalb einer Beifahrertür (5), angeordnete Bildgebungseinrichtung verwendet wird.

2. Verfahren nach Anspruch 1,
**dadurch gekennzeichnet,**
**dass** die Informationen zur Anpassung wenigstens eines Betriebsparameters wenigstens eines Fahrerassistenzsystems (2) und/oder Sicherheitssystems (2) verwendet werden.

3. Verfahren nach Anspruch 1 oder 2,
**dadurch gekennzeichnet,**
**dass** eine senkrecht zur Fahrtrichtung ausgerichtete Bildgebungseinrichtung verwendet wird.

4. Verfahren nach einem der vorangehenden Ansprüche,
**dadurch gekennzeichnet,**
**dass** eine im Bereich eines Haltegriffes angeordnete Bildgebungseinrichtung verwendet wird.

5. Verfahren nach einem der vorangehenden Ansprüche,
**dadurch gekennzeichnet,**
**dass** die Kopfausrichtung bezüglich der Fahrtrichtung anhand eines Überstandes der in den Daten detektierten Nase (12) des Fahrers (6) ermittelt wird.

6. Verfahren nach Anspruch 5,
**dadurch gekennzeichnet,**
**dass** weitere Merkmale in den Daten detektiert und berücksichtigt werden, insbesondere ein Ohr und/oder ein Kinn und/oder ein Auge.

7. Verfahren nach Anspruch 5 oder 6,
**dadurch gekennzeichnet,**
**dass** eine relative Nasenlängenänderung bei Kopfdrehung bezüglich einer Basisnasenlänge ermittelt wird.

8. Verfahren nach Anspruch 7,
**dadurch gekennzeichnet,**
**dass** die Basisnasenlänge als Maximalnasenlänge in einer Datenauswertung über einen Zeitraum ermittelt wird.

9. Verfahren nach einem der vorangehenden Ansprüche,
**dadurch gekennzeichnet,**
**dass** die ovale Form des Lenkradkranzes (7) aus den Daten ermittelt und bei der Ermittlung der Informationen berücksichtigt wird.

10. Verfahren nach Anspruch 9,
**dadurch gekennzeichnet,**
**dass** zur Ermittlung der auf die Position der Hände (17) bezüglich des Lenkrads bezogenen Information die ovale Form auf Unterbrechungen untersucht wird.

11. Verfahren nach Anspruch 9,
**dadurch gekennzeichnet,**
**dass** zur Ermittlung der auf die Position der Hände (17) bezüglich des Lenkrads bezogenen Information eine Position beider Hände (17), aus den Daten ermittelt wird und ein Vergleich der Positionen der ovalen Form und der Hände (17) durchgeführt wird, wobei bei einer Überdeckung im Bild die Hände (17) des Fahrers (6) am Lenkrad angenommen werden.

12. Verfahren nach einem der vorangehenden Ansprüche,
**dadurch gekennzeichnet,**
**dass** die Bildgebungseinrichtung eine Infrarot-Kamera (4) oder eine Kamera mit einem Infrarotdurchlassfilter ist, wobei eine Infrarot-Lichtquelle (9) zur Beleuchtung der aufzunehmenden Szenerie verwendet wird.

13. Verfahren nach einem der vorangehenden Ansprüche,
**dadurch gekennzeichnet,**
**dass** bei der Ermittlung der auf die Position der Hände (17) bezüglich des Lenkrads bezogenen Information Daten wenigstens einer weiteren Messeinrichtung, insbesondere eines Lenksignalsensors, berücksichtigt werden, insbesondere zur gegenseitigen Plausibilisierung.

14. Verfahren nach einem der vorangehenden Ansprüche, **dadurch gekennzeichnet, dass** die mittels der Bildgebungseinrichtung aufgenommenen Daten durch die Bildverarbeitung auch zur Ermittlung einer die Anwesenheit eines Fahrers (6) beschreibenden Information ausgewertet werden.

15. Kraftfahrzeug (1) mit wenigstens einem Fahrerassistenzsystem (2) und/oder wenigstens einem Sicherheitssystem (2), einer Bildverarbeitungseinrichtung (10) und einer Bildgebungseinrichtung, ausgebildet zur Durchführung des Verfahrens nach einem der vorangehenden Ansprüche.

## Claims

1. Method for determining information relating to the viewing direction of a driver and/or the position of the hands of the driver (6) in relation to the steering wheel in a motor vehicle (1), data recorded by an imaging device, in particular a camera (4), which detects the steering wheel and the head of a driver (6), being evaluated in order to determine the information by means of image processing, **characterised in that** an imaging device arranged for lateral recording of the head of the driver (6) and for recording the steering wheel rim (7) at an angle and in a region, near the roof, of the A-pillar (8) or an imaging device arranged on the roof above a passenger door (5) is used.

2. Method according to claim 1, **characterised in that** the information is used to adapt at least one operating parameter of at least one driver assistance system (2) and/or safety system (2).

3. Method according to either claim 1 or claim 2, **characterised in that** an imaging device orientated perpendicular to the direction of travel is used.

4. Method according to any of the preceding claims, **characterised in that** an imaging device arranged in the region of a handle is used.

5. Method according to any of the preceding claims, **characterised in that** the head orientation in relation to the direction of travel is determined on the basis of a projection of the nose (12) of the driver (6), which nose is detected in the data.

6. Method according to claim 5, **characterised in that** further features in the data are detected and considered, in particular an ear and/or a chin and/or an eye.

7. Method according to either claim 5 or claim 6, **characterised in that** a relative change in nose length upon head rotation in relation to a basic nose length is determined.

8. Method according to claim 7, **characterised in that** the basic nose length is determined as a maximum nose length in data evaluation over a period of time.

9. Method according to any of the preceding claims, **characterised in that** the oval shape of the steering wheel rim (7) is determined from the data and considered when determining the information.

10. Method according to claim 9, **characterised in that**, to determine the information relating to the position of the hands (17) in relation to the steering wheel, the oval shape is examined for discontinuities.

11. Method according to claim 9, **characterised in that**, to determine the information relating to the position of the hands (17) in relation to the steering wheel, a position of the two hands (17) is determined from the data and the positions of the oval shape and of the hands (17) are compared, the hands (17) of the driver (6) being assumed to be on the steering wheel in the case of an overlap in the image.

12. Method according to any of the preceding claims, **characterised in that** the imaging device is an infrared camera (4) or a camera comprising an infrared filter, an infrared light source (9) being used to illuminate the setting to be recorded.

13. Method according to any of the preceding claims, **characterised in that**, to determine the information relating to the position of the hands (17) in relation to the steering wheel, data from at least one further measuring device, in particular a steering signal sensor, are considered, in particular for mutual plausibility checking.

14. Method according to any of the preceding claims, **characterised in that** the data recorded by means of the imaging device are also evaluated by means of the image processing in order to determine information describing the presence of a driver (6).

15. Motor vehicle (1) comprising at least one driver assistance system (2) and/or at least one safety system (2), an image processing device (10) and an imaging device designed to carry out the method according to any of the preceding claims.

## Revendications

1. Procédé de détermination d'informations relatives à la direction du regard d'un conducteur et/ou de la position des mains du conducteur (6) par rapport au volant de direction dans un véhicule automobile (1), dans lequel :
des données reçues d'un dispositif émetteur d'image détectant le volant de direction et la tête d'un conducteur (6), en particulier une caméra (4) sont exploitées pour obtenir des informations au moyen d'un traitement d'images, **caractérisé en ce qu'**on utilise un dispositif émetteur d'image aménagé pour enregistrer latéralement la tête du conducteur (6) et pour enregistrer le rebord du volant de direction (7) sous un certain angle et dans une zone du montant A (8) proche du toit, ou un dispositif émetteur d'image aménagé sur le toit au-dessus d'une porte de passager avant (5).

2. Procédé selon la revendication 1,
**caractérisé en ce que**
les informations sont utilisées pour adapter au moins un paramètre de fonctionnement d'au moins un système d'assistance conducteur (2) et/ou un système de sécurité (2).

3. Procédé selon la revendication 1 ou 2,
**caractérisé en ce que** l'on utilise un dispositif émetteur d'image orienté perpendiculairement à la direction de déplacement.

4. Procédé selon l'une quelconque des revendications précédentes,
**caractérisé en ce que** l'on utilise un dispositif émetteur d'image aménagé dans la zone d'une poignée.

5. Procédé selon l'une quelconque des revendications précédentes,
**caractérisé en ce que** l'orientation de la tête par rapport à la direction de déplacement est déterminée sur la base d'un dépassement du nez (12) du conducteur (6) détecté dans les données.

6. Procédé selon la revendication 5,
**caractérisé en ce que**
d'autres caractéristiques sont détectées dans les données et prises en compte, en particulier une oreille et/ou un menton et/ou un fil.

7. Procédé selon la revendication 5 ou 6,
**caractérisé en ce que**
une modification relative de la longueur du nez par rapport à une longueur de base du nez est déterminée lors d'une rotation de la tête.

8. Procédé selon la revendication 7,
**caractérisé en ce que**
la longueur de base du nez est déterminée comme longueur maximale du nez, sur un intervalle de temps, dans une exploitation de données.

9. Procédé selon l'une quelconque des revendications précédentes,
**caractérisé en ce que** la forme ovale du rebord (7) du volant de direction est déterminée à partir des données et est prise en compte lors de la détermination des informations.

10. Procédé selon la revendication 9,
**caractérisé en ce que**,
pour déterminer les informations relatives à la position des mains (17) par rapport au volant de direction, on recherche les discontinuités de la forme ovale.

11. Procédé selon la revendication 9,
**caractérisé en ce que**,
pour déterminer les informations relatives à la position des mains (17) par rapport au volant de direction, on détermine une position des deux mains (17) à partir des données et on effectue une comparaison des positions de la forme ovale et des mains (17), en considérant les mains (17) du conducteur (6) sur le volant de direction par un recouvrement dans l'image.

12. Procédé selon l'une quelconque des revendications
précédentes,
**caractérisé en ce que**
le dispositif émetteur d'image est une caméra infrarouge (4) ou une caméra avec un filtre laissant passer les infrarouges, une source de lumière infrarouge (9) étant utilisée pour éclairer la scène à capter.

13. Procédé selon l'une quelconque des revendications
précédentes,
**caractérisé en ce que**,
lors de la détermination des informations relatives à la position des mains (17) par rapport au volant de direction, des données d'au moins un autre dispositif de mesure, en particulier un capteur de signal de direction, sont prises en compte, en particulier pour la vraisemblance mutuelle.

14. Procédé selon l'une quelconque des revendications précédentes, **caractérisé en ce que** les données reçues au moyen du dispositif émetteur d'image sont exploitées par le traitement d'image également pour déterminer une information décrivant la présence d'un conducteur (6).

15. Véhicule automobile (1) comportant au moins un système d'assistance au conducteur (2) et/ou au moins un système de sécurité (2), un dispositif de traitement d'image (10) et un dispositif émetteur d'image, conformés de manière à réaliser le procédé selon l'une quelconque des revendications précédentes.
